# EUROPÄISCHE PATENTANMELDUNG

(11) **EP 0 990 985 A2**
(43) Veröffentlichungstag der Anmeldung: **05.04.2000**
(21) Anmeldenummer: 99119036.4
(22) Anmeldetag: 29.09.1999
(51) Int. Cl.: G06F 9/445, G06F 15/76

(54) **Verfahren zum Betrieb eines Netzcomputers**

(30) Priorität: 30.09.1998 DE 19844942
(71) Anmelder: SIEMENS AKTIENGESELLSCHAFT, 80333 München (DE)
(72) Erfinder: Buchenrieder, Klaus, Prof., 85521 Riemerling (DE); Kress, Rainer, 85604 Pöring (DE); Sedlmeier, Alexander, 84036 Landshut (DE)

(57) **Zusammenfassung**

Der Netzcomputer (1) weist eine an ein Netzwerk (2) anschließbare rekonfigurierbare Hardware (10) auf, die aus einem oder mehreren FPGAs oder aus FPGAs mit Prozessoren und Speicher bestehen. Dieser Computer ist vorteilhafterweise über das Netz insbesondere dynamisch strukturierbar.

## Beschreibung

Die Erfindung betrifft ein Verfahren zum Betrieb eines Netzcomputers.

Von der Firma SUN wird ein Netzcomputer angeboten, der Daten und Programme von einem Server erhält. Unter Netzcomputer ist dabei ein Computer zu verstehen, der beim Benutzer steht. Im allgemeinen besteht ein solcher Netzcomputer aus Monitor, Tastatur, CPU, Speicher und einem Interface für den Zugang zu einem Netzwerk. Sowohl für die Datenverwaltung wie bei Client und/oder Server als auch für die Applikationen ist in zentraler Rechner zuständig. Soll am Netzcomputer eine Applikation gestartet werden, um Daten zu verarbeiten, z.B. eine Textverarbeitung auszuführen, werden benötigte Programmteile über das Netzwerk geladen und ausgeführt. Weitere benötigte Programmteile werden automatisch nachgeladen. Alle Daten werden zentral gespeichert. Ein Vorteil ist unter anderem der geringe Administrationsaufwand am Benutzerarbeitsplatz (siehe z.B. Veröffentlichungen der Firma SUN mit dem Titel 'JavaStation - An Overview' 1996, abrufbar unter http://www.sun.com/javastation/whitepapers/javastation). Durch Netzwerke wie Intranets oder Internet werden solche Netzcomputer unterstützt. Die Hardware-Architektur eines solchen Netzcomputers ist fest.

Weitere Verbindungen von Computern über Netzwerke sind z.B. bei Workstations üblich. Auf Daten anderer Computer kann über das Netzwerk, z.B. Ethernet, zugegriffen werden, oder einzelne Programmteile, sogenannte Tasks, oder komplette Programme können auf anderen Computern ferngestartet und berechnet werden.

Der Erfindung liegt die Aufgabe zugrunde, ein Verfahren zum Betrieb von einem strukturierbaren Netzcomputer bereitzustellen.

Diese Aufgabe wird durch das im Anspruch 1 angegebene Verfahren gelöst.

Ein bevorzugtes und vorteilhaftes Verfahren zum Betrieb eines an ein Netzwerk angeschlossenen strukturierbaren Computers weist die Schritte
- selbstständiges Laden und/oder Laden auf spezielle Anforderung von diesem Computer zugeordneten Konfigurationsdaten über das Netzwerk in den Computer,
- Konfigurieren der Hardware des Computers entsprechend diesen Konfigurationsdaten, und
- Bearbeiten einer Aufgabe mit dem so konfigurierten Computer auf.

Ein besonderer Vorteil des strukturierbaren Computers ist darin zu sehen, daß er dynamisch über das Netz strukturierbar ist, d.h. die Konfiguration der Hardware kann dynamisch über das Netzwerk verändert werden.

Ein Verfahren zum dynamischen Strukturieren des strukturierbaren Computers, das vorteilhafterweise mit dem vorstehend angegebenen Verfahren kompatibel ist, weist die Schritte
- Bearbeiten einer Aufgabe mit dem für diese Aufgabe konfigurierten Computer
- Konfigurieren bereits vor Beendigung der Bearbeitung dieser Aufgabe eines für diese Bearbeitung nicht mehr gebrauchten Teils der Hardware des Computers für die Bearbeitung einer anderen Aufgabe durch Laden von dieser anderen Aufgabe zugeordneten Konfigurationsdaten über das Netzwerk in den Computer auf.

Durch eine solche dynamische Strukturierung kann die Rechengeschwindigkeit beträchtlich erhöht werden, insbesondere wenn so vorgegangen wird, der für die Bearbeitung der einen Aufgabe nicht mehr gebrauchte Teil der Hardware des Computers so für die Bearbeitung der anderen Aufgabe konfiguriert wird, daß mit der Bearbeitung der anderen Aufgabe bereits vor Beendigung der Bearbeitung der einen Aufgabe begonnen werden kann.

Neben dem Vorteil der dynamischen Rekonfigurierbar weist der strukturierbare Netzcomputer die Vorteile auf daß er modular erweiterbar ist und im Verbund oder einzeln dedizierte programmierte Probleme effizient lösen kann.

Strukturierbar im vorstehenden Sinn bedeutet, daß der strukturierbare Netzcomputer zunächst keine Struktur aufweist, d.h., daß sämtliche Hardware-Ressourcen sind gleich sind. Nach der Programmierung oder Konfigurierung, weist der strukturierbare Netzcomputer eine Struktur für eine spezielle Aufgabe auf. Durch Rekonfigurierung kann jederzeit die Struktur geändert werden und einer neuen Aufgabe angepaßt werden.

Dynamisch Rekonfigurieren bedeutet, daß die Konfiguration auch während der Laufzeit passieren kann, d.h. während der strukturierbare Netzcomputer an einer Aufgabe rechnet, kann ein anderer Teil des Computers bereits wieder rekonfiguriert werden. Der strukturierbare Netzcomputer kann selbstständig über das Netz mit anderen Prozessorelementen, z.B. mit anderen Netzcomputern oder auch normalen Hostrechnern in Verbindung treten um Probleme zu lösen oder bei deren Bearbeitung zu unterstützen.

Die Erfindung wird in der nachfolgenden Beschreibung anhand der Zeichnung beispielhaft näher erläutert. Es zeigen in stark vereinfachter schematischer Darstellung:
- Figur 1: einen strukturierbaren Netzcomputer, der durch eine Schnittstelle an ein Netz angeschlossen ist, und
- Figur 2: mehrere durch jeweils eine Schnittstelle an ein Netzwerk angeschlossene Netzcomputer.

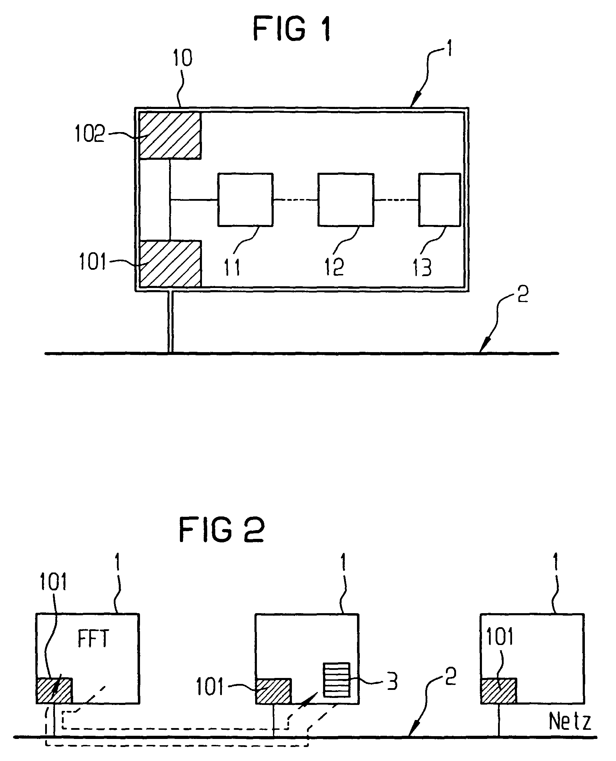

Der in Figur 1 generell mit 1 bezeichnete strukturierbare Netzcomputer weist eine über eine Schnittstelle 101 an ein Netzwerk 2, beispielsweise das Internet oder Intranet, anschließbare rekonfigurierbare Hardware oder Hardware-Plattform 10 auf, die wiederum ein oder mehrere FPGAs 11 oder ein oder mehrere FPGAs 11 und einen oder mehrere Prozessoren 12 und oder einen oder mehrere Speicher 13 aufweist.

Alle FPGAs 11 und ggf. Prozessoren 12 und Speicher 13 sind mit der Schnittstelle 101 verbunden. Durch diese Schnittstelle 101 ist die Hardware 10 über das Netzwerk 2 zugänglich ist, beispielsweise für eine Akzeleration von Algorithmen und/oder eine Emulation von ASICs.

Durch eine weitere aber nicht notwendige Schnittstelle 102 der Hardware 10 kann ein Benutzer des Computers 1 direkten Zugang zur Hardware 10 haben.

Der Computer 1 oder die Hardware 10 lädt sich beim Einschalten (on boot) oder auf spezielle Anforderung ihm zugeordnete Konfigurationsdaten über das Netzwerk 2 und verhält sich anschließend entsprechend seiner Konfiguration.

Der Computer 1 hat zunächst keine Struktur, sämtliche Hardware-Ressourcen sind gleich. Beim Einschalten oder auf spezielle Anforderung strukturiert sich der Computer 1 für eine dedizierte Aufgabe.

Jederzeit kann die Struktur für eine neue Aufgabe geändert werden. Der Konfigurationscode wird beispielsweise auf einem Server zentral verwaltet.

Der Computer 1 kann dynamisch Teile der Konfiguration nachladen, d.h. er konfiguriert einen Teil seiner Hardware 10 während in einem anderen Teil noch gerechnet wird. Damit ermöglicht er komplexe Probleme zu lösen, die komplett nicht auf die verfügbaren Hardware-Ressourcen gepaßt hätten. Die Konfigurationsdaten werden zentral verwaltet und können bei Bedarf über das Netzwerk abgerufen werden.

Hängen wie in Figur 2 gezeigt mehrere dieser Computer 1 an einem Netzwerk 2, so ist es möglich, daß diese sich sowohl untereinander als auch einen nicht dargestellten Netzcomputer, der nur einen Prozessor und Speicher und keine FPGAs aufweist, unterstützen.

Beispielsweise kann so vorgegangen werden, daß ein Computer 1, der eine Aufgabe zu erledigen hat, in einem Speicher eines anderen Computers 1 eine für alle anderen Netzcomputer zugängliche Liste 3 mit zu bearbeitenden Aufgaben ablegt. Ein zur Zeit freier Computer 1 sucht sich in dieser Liste 3 eine Aufgabe, beispielsweise eine FFT (Fast Fourier Transformation) holt sich die notwendigen Konfigurationsdaten von einem zentralen Server und konfiguriert sich speziell für diese Aufgabe, die (z.B. Fast Fourier Transformation, FFT). Als Spezialist kann er die Aufgabe sehr effizient und schnell ausführen. Nach der Ausführung gibt er die berechneten Daten an den ursprünglichen Computer zurück.

Der Netzcomputer kommuniziert mit anderen Netzcomputern beispielsweise über sogenannte Objekte. Das Objekt besteht z. B. aus drei Komponenten: Routing, Code und Daten. Der Routing-Teil gibt an wohin das Objekt zu versenden ist. Der Code-Teil besteht aus zwei Sektionen, einem Software und einem Hardware-Teil. Beide Teile sind funktional äquivalent. Die Software wird auf einer virtuellen Maschine im Netzcomputer ausgeführt. Somit ist gewährleistet, daß die Software auf jedem beliebigen Netzcomputer ausgeführt werden kann. Die Netzcomputer können sich aber beispielsweise in ihrer Geschwindigkeit unterscheiden. Geschieht die Ausführung in Hardware, so wird ein konfigurierbarer Teil des Netzcomputers mit Hilfe des Codes im Hardware-Teil des Objektes konfiguriert. Der Code ist so angelegt, daß er auf mehreren unterschiedlichen zu konfigurierenden Hardwareplattformen laufen kann. Der Software und auch der Hardware Teil sind optional. Es können also auch reine Datenobjekte, oder Objekte ohne Hardware-Teil verschickt werden. Der Datenteil enthält private Daten des Objektes.

Eine mögliche Ausführung eines Objektes ist nachfolgend beispielhaft beschrieben, wobei der ausführende Netzcomputer, welcher ein Programm ausführen möchte, Netzcomputer A und der Netzcomputer, welcher ein Datenobjekt empfängt, Netzcomputer B genannt wird.

1. Der Netzcomputer A sendet einen Aufruf an alle sich im Netzwerk befindlichen Netzcomputer ihm Informationen über ihre freien Ressourcen zu senden.

2. Die antwortenden Netzcomputer senden ihre Routing-Information und ihre Information über freie Resourcen. Darin sind auch weitere Informationen enthalten wie beispielsweise Funktionen die der Netzcomputer besonders gut kann.

Eine Variante zum allgemeinen Anruf von Netzcomputer A: Statt einen Aufruf an alle zu senden, kann Netzcomputer A auch einen Informationsmaster, falls vorhanden, nach den entsprechenden Informationen fragen.

3. Ein Netzcomputer A sucht einen Netzcomputer, z. B. den Netzcomputer B, aus. Er packt die entsprechende Routing-Information zum zu berechnenden Objekt dazu und versendet das Objekt.

4. Netzcomputer B empfängt das Objekt, berechnet es und sendet die berechneten Daten als neues Objekt wieder zurück. Die Berechnung kann in Software, Hardware oder gemischt stattfinden.

Ein Netzcomputer kann jederzeit zum Netzwerk hinzu oder abgesteckt werden.

Ein Objekt mit berechneten Ergebnissen wird erst vom aufrufenden Netzcomputer freigegeben wenn sich
a) weitere Berechnungen unabhängig vom Vorgänger berechnen lassen oder
b) wenn voneinander abhängige Berechnungen vollständig abgeschlossen sind.

Der Netzcomputer B kann auch Unteraufträge vergeben, indem er wiederum ein Objekt weiterschickt.

Ein Objekt kann Sicherheitsinformationen enthalten. Zum Beispiel können einzelne Netzcomputer, Gruppen, oder Netzwerksegmente angegeben werden. Andere Netzcomputer werden dann nicht berücksichtigt.

Netzcomputer können ihre Objekte verschlüsselt austauschen, zum Beispiel über PGP (Pretty Good Privacy Verschlüsselung). Dazu kann zum Beispiel Netzcomputer B seinen öffentlichen Schlüssel an Netzcomputer A senden. Damit kann Netzcomputer A das Objekt verschlüsseln. Nur Netzcomputer B kann das Objekt dann wieder entschlüsseln, weil nur er den privaten Schlüssel hat.

## Patentansprüche

1. Verfahren zum Betrieb eines an ein Netzwerk (2) angeschlossenen Computers (1) nach einem der vorhergehenden Ansprüche, mit den Schritten
- selbstständiges Laden und/oder Laden auf spezielle Anforderung von diesem Computer (1) zugeordneten Konfigurationsdaten über das Netzwerk (2) in den Computer (1),
- Konfigurieren der Hardware (10) des Computers (1) entsprechend diesen Konfigurationsdaten, und
- Bearbeiten einer Aufgabe mit dem so konfigurierten Computer (1).

2. Verfahren zum Betrieb eines Computers (1) nach Anspruch 1, mit den Schritten
- Bearbeiten einer Aufgabe mit dem für diese Aufgabe konfigurierten Computer (1)
- Konfigurieren bereits vor Beendigung der Bearbeitung dieser Aufgabe eines für diese Bearbeitung nicht mehr gebrauchten Teils der Hardware (10) des Computers (1) für die Bearbeitung einer anderen Aufgabe durch Laden von dieser anderen Aufgabe zugeordneten Konfigurationsdaten über das Netzwerk (2) in den Computer (1).

3. Verfahren nach Anspruch 2, wobei der für die Bearbeitung der einen Aufgabe nicht mehr gebrauchte Teil der Hardware (10) des Computers (1) so für die Bearbeitung der anderen Aufgabe konfiguriert wird, daß mit der Bearbeitung der anderen Aufgabe bereits vor Beendigung der Bearbeitung der einen Aufgabe begonnen werden kann.

4. Verfahren nach Anspruch 1,
bei dem ein Computer (1) einen Aufruf zur Mitteilung der freien Resourcen an alle sich im Netzwerk (2) befindlichen Computer sendet,
bei dem antwortende weitere Computer ihre Routing-Information und ihre Information über freie Resourcen senden,
bei dem der Computer (1) einen der weiteren Computer aussucht und die entsprechende Routing-Information zum zu berechnenden Objekt dazu packt und ein Objekt versendet und
bei dem einer der weitereren Computer das Objekt empfängt, berechnet und die berechneten Daten als neues Objekt wieder zurücksendet.
